## Europäisches Patentamt

## European Patent Office

## Office européen des brevets

(11) Numéro de publication: **0 193 461**
**B1**

(12) # FASCICULE DE BREVET EUROPEEN

(45) Date de publication du fascicule du brevet:
**03.05.89**

(51) Int. Cl.⁴: **G21C 17/06**, B07C 5/06

(21) Numéro de dépôt: **86400369.4**

(22) Date de dépôt: **21.02.86**

(54) Distributeur calibreur d'éléments cylindriques.

(30) Priorité: **27.02.85 FR 8502844**

(43) Date de publication de la demande:
**03.09.86 Bulletin 86/36**

(45) Mention de la délivrance du brevet:
**03.05.89 Bulletin 89/18**

(84) Etats contractants désignés:
**BE DE GB IT**

(56) Documents cités:
**EP-A- 0 038 378**
**BE-A- 631 494**
**FR-A- 2 389 096**
**US-A- 2 364 187**
**US-A- 3 221 152**

(73) Titulaire: **COMMISSARIAT A L'ENERGIE ATOMIQUE,
31/33, rue de la Fédération, F-75015 Paris(FR)**

(72) Inventeur: **Mabboux, Marcel, 186 Montée des Bassins,
F-04100 Manosque(FR)**
Inventeur: **Mercier, Claude, Montée de Manen Chemin
du Clos, F-04100 Manosque(FR)**

(74) Mandataire: **Mongrédien, André et al, c/o
BREVATOME 25, rue de Ponthieu, F-75008 Paris(FR)**

ACTORUM AG

## Description

La présente invention a pour objet un distributeur calibreur d'éléments cylindriques. Elle s'applique notamment quoique de façon non limitative à la constitution de colonnes de pastilles combustibles radioactives.

Le "cœur" d'un réacteur nucléaire comporte un grand nombre d'"aiguilles" combustibles disposées en faisceau dans des assemblages. Elles sont le siège d'une réaction nucléaire, base de fonctionnement du réacteur.

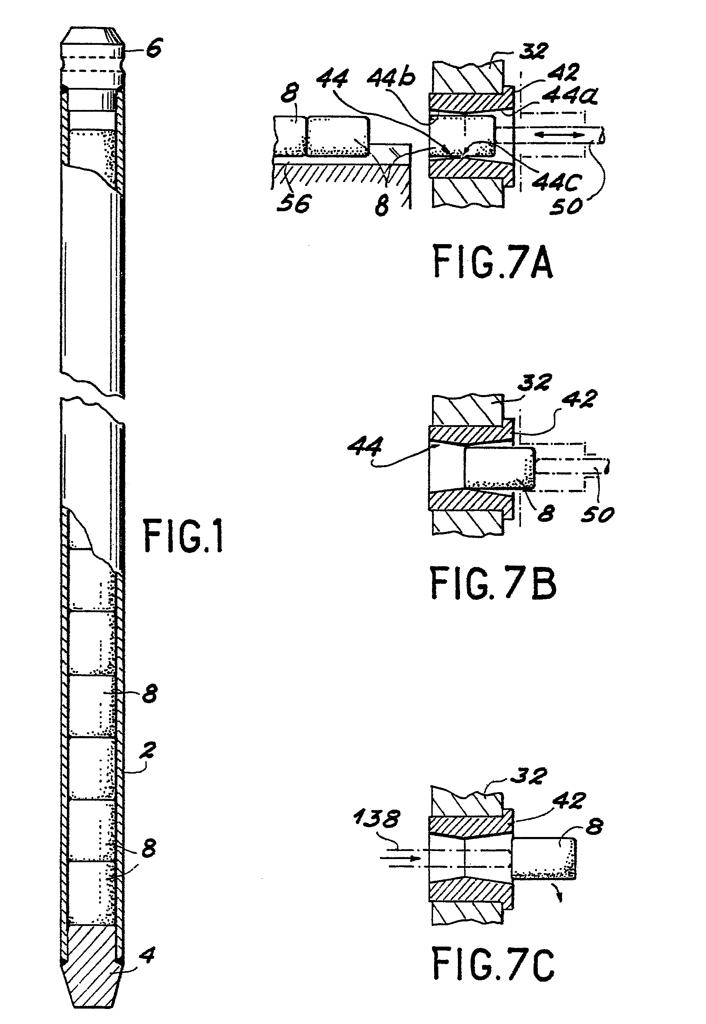

Une aiguille combustible est représentée sur la figure 1 de façon simplifiée et en coupe longitudinale. L'aiguille comprend une gaine 2 tubulaire fermée à ses extrémités par deux bouchons 4, 6 et dans laquelle est enfilée une colonne de pastilles combustibles 8. Habituellement, une aiguille comporte plusieurs dizaines de pastilles 8.

Le jeu entre la gaine 2 et les pastilles 8 est très réduit, ce qui impose un calibrage soigneux du diamètre des pastilles combustibles. Or, celles-ci, fabriquées en grande série, ne sont pas rectifiées après frittage et sont sujettes à des dispersions sur leur diamètre; elles doivent donc être soumises à un contrôle sélectif. Un appareil de vérification de dimension des pastilles combustibles est décrit dans FR-A 2 389 096.

Un des objets de l'invention est justement de proposer un distributeur calibreur à grande cadence d'éléments cylindriques tels que des pastilles combustibles, apte à constituer des colonnes d'éléments cylindriques dont le diamètre est inférieur ou égal à un diamètre maximum toléré et à rejeter au rebut les éléments non conformes.

De façon plus précise, l'invention a pour objet un distributeur calibreur d'éléments cylindriques comprenant:

— un poste d'alimentation en éléments cylindriques;

— un poste de distribution desdits éléments ;

— un poste d'éjection des éléments cylindriques non conformes; caractérisé en ce qu'il comporte;

— un barillet de transfert desdits éléments entre le poste d'alimentation et le poste de distribution, ce barillet étant percé d'alvéoles équidistants aptes à recevoir chacun l'un desdits éléments;

— un plateau calibreur apte transférer entre le poste de distribution et le poste d'éjection les éléments cylindriques dont le diamètre est supérieur à un diamètre maximum toléré, ce plateau étant percé de trous calibrés équidistants au moins en partie tronconique, dont le diamètre intérieur est égal audit diamètre maximum toléré;

— des moyens pour faire tourner pas-à-pas le barillet de transfert et le plateau calibreur et faire défiler successivement chaque alvéole devant le poste d'alimentation et devant le poste de distribution, et chaque trou devant le poste de distribution et le poste d'éjection, de telle sorte qu'un alvéole et un trou soient alignés en vis-à-vis du poste de distribution;

— le poste de distribution comprenant des moyens pour pousser les éléments cylindriques contenus dans les alvéoles au travers des trous calibrés avec une force maximum prédéterminée, de telle sorte que seuls les éléments cylindriques de diamètre inférieur ou sensiblement égal au diamètre maximum toléré traversent lesdits trous, les éléments de diamètre supérieur à ce diamètre maximum restant coincés dans lesdits trous; et

— le poste d'éjection comprenant des moyens pour éjecter les éléments cylindriques coincés dans lesdits trous et les éléments dont le diamètre est supérieur audit diamètre maximum toléré.

Plus précisément encore, les moyens du poste de distribution pour pousser les éléments cylindriques comportent un bâti mobile guidé en translation par une glissière fixe d'axe parallèle auxdits trou et alvéole alignés, des moyens d'entraînement permettant un mouvement alternatif du bâti mobile, une première extrémité d'un levier étant montée de façon pivotante sur le bâti mobile autour d'un axe de rotation perpendiculaire audit axe de la glissière, l'autre extrémité dudit levier étant montée de façon pivotante à l'extrémité d'un piston distributeur, ledit piston étant mobile en translation et animé d'un mouvement alternatif, selon un axe confondu avec l'alvéole et le trou alignés en vis-à-vis du poste de distribution.

De façon avantageuse, des moyens de limitation d'effort sont interposés dans l'ensemble constitué par ledit levier et ledit piston distributeur, lesdits moyens de limitation d'effort ne transmettant pas au piston le mouvement du bâti mobile lorsque le piston est bloqué par un élément cylindrique de diamètre supérieur au diamètre maximum toléré et coincé dans un trou du plateau calibreur.

De préférence, les moyens du poste d'éjection comportent un piston éjecteur fixé audit bâti mobile parallèlement au trou et à l'alvéole alignés de façon à pénétrer successivement dans chacun des trous du plateau calibreur et à éjecter les éléments cylindriques coincés dans lesdits trous.

De façon avantageuse, le barillet de transfert et le plateau calibreur possèdent chacun une couronne dentée, les couronnes du barillet et du plateau formant un engrenage.

Lors du fonctionnement, un morceau de pastille peut rester au fond d'un des alvéoles. Lorsqu'une nouvelle pastille est introduite dans cet alvéole, elle peut dépasser de l'alvéole et être la cause d'un incident de fonctionnement du distributeur calibreur selon l'invention.

Un autre objet de l'invention est justement de présenter un distributeur calibreur comportant un dispositif apte à détecter les surlongueurs des éléments cylindriques et placé sur le barillet de transfert. Ce dispositif comporte une plaque libre en rotation dont la paroi en vis-à-vis du barillet est située à une distance uniforme de l'extrémité intérieure de chacun des alvéoles correspondant à une longueur maximale autorisée des éléments cylindriques, cette plaque comportant une échancrure normalement située en face du poste d'alimentation et des moyens pour détecter un entraînement en rotation de ladite plaque par un élément cylindrique dépassant ladite longueur maximale autorisée.

D'autres avantages et caractéristiques de l'invention ressortiront mieux de la description qui suit, donnée à titre explicatif mais nullement limitatif, en référence aux figures annexées, sur lesquelles:

- la figure 1, déjà décrite, représente une vue simplifiée et en coupe longitudinale d'une aiguille combustible;
- la figure 2 représente une vue latérale avec une coupe partielle du distributeur calibreur selon un mode préféré de réalisation;
- la figure 3 représente une vue de face du distributeur calibreur de la figure 2;
- la figure 4 représente une vue de dessus du distributeur calibreur des figures 2 et 3;
- la figure 5 représente une vue latérale du levier articulé;
- la figure 6 représente, en coupe transversale, le levier articulé;
- les figures 7A, B, C représentent en coupe longitudinale un trou calibré du plateau calibreur et les pastilles qui y sont introduites;
- la figure 8 représente en coupe longitudinale le barillet de transfert et le dispositif apte à détecter les surlongueurs des pastilles;
- la figure 9 représente une vue selon la flèche A de la figure 8 du dispositif apte à détecter les surlongueurs des pastilles.

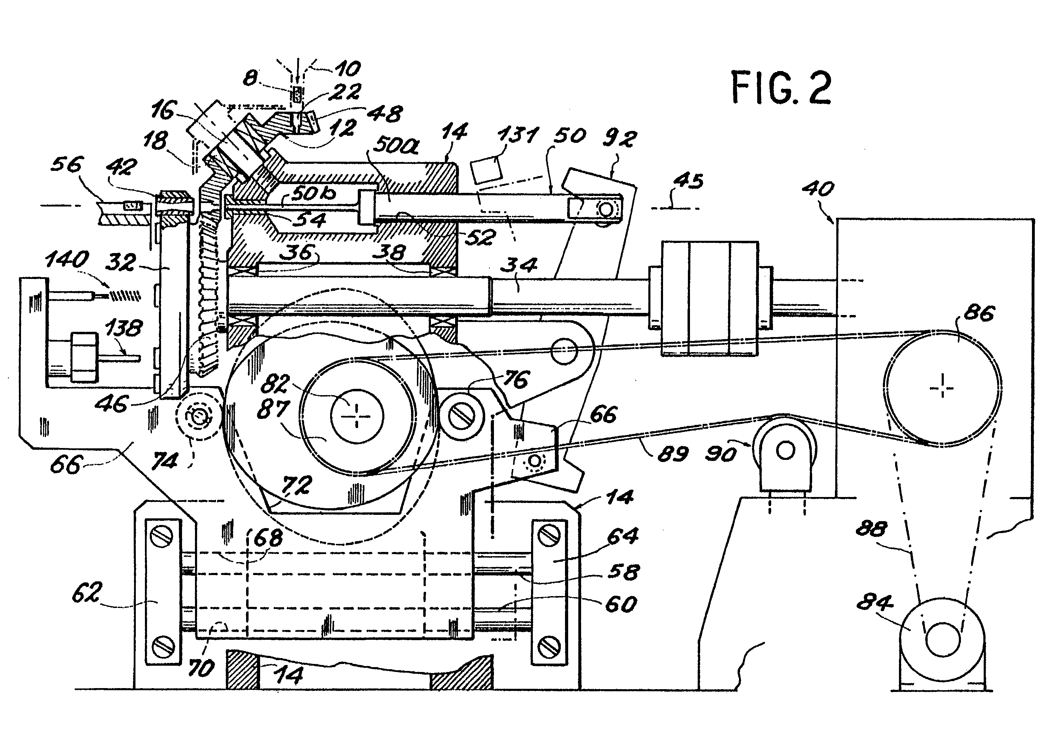

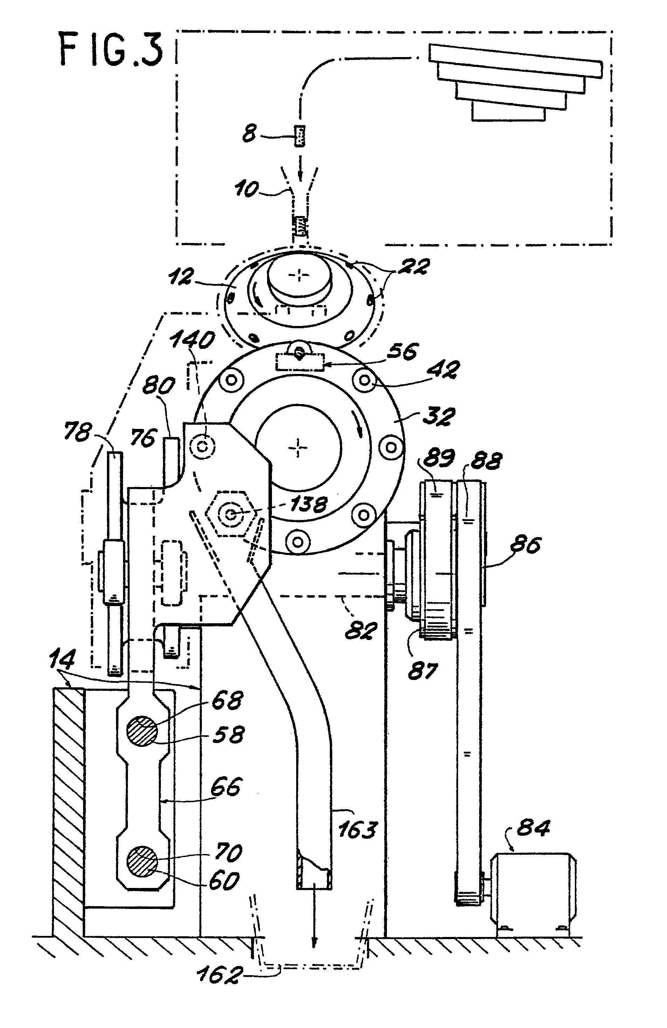

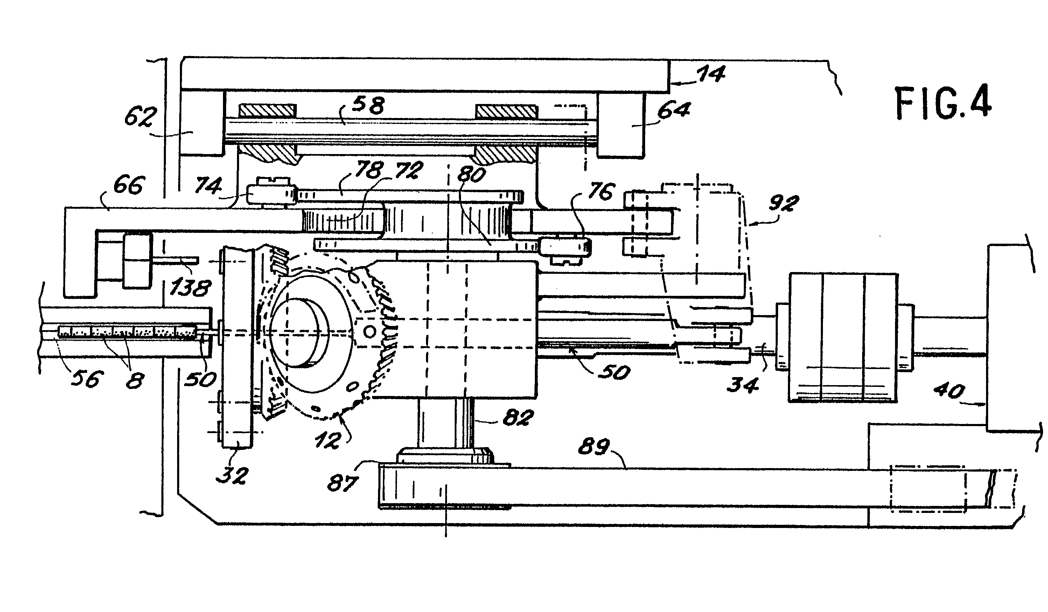

Un mode préféré de réalisation du distributeur calibreur selon l'invention est représenté sur les figures 2, 3 et 4.

Le distributeur calibreur comporte tout d'abord un poste d'alimentation en éléments cylindriques tels que des pastilles combustibles 8. Ce poste comprend notamment un bol vibrant et une goulotte d'alimentation 10 dont l'extrémité inférieure est verticale. Le diamètre intérieur de la goulotte 10 est sensiblement égal au diamètre des pastilles 8, ce qui permet à celles-ci de se présenter verticalement (c'est-à-dire que leur axe de révolution est vertical) à l'extrémité inférieure de ladite goulotte 10.

Un barillet de transfert 12 est disposé en dessous du poste d'alimentation. Le barillet 12 est constitué par une pièce tronconique de demi-angle au sommet égal à 45°. Ce barillet 12 est monté en libre rotation sur un bâti 14, l'axe propre dudit barillet étant confondu avec un axe de rotation 16 vissé dans ledit bâti 14 à 45° sur l'horizontale. Au moins un roulement 18 permet la rotation du barillet 12 autour de l'axe 16, le maintien en translation étant assuré de façon habituelle.

Des alvéoles 22 équidistants, par exemple au nombre de huit, sont percés dans le barillet 12 de telle façon que leur axe forme un angle de 45° avec l'axe de rotation 16 et soit sécant avec cet axe 16 en un même point. A chaque rotation d'un huitième de tour du barillet 12, un alvéole 22 est vertical et coaxial avec la goulotte d'alimentation 10, l'alvéole 22 diamétralement opposé étant alors horizontal.

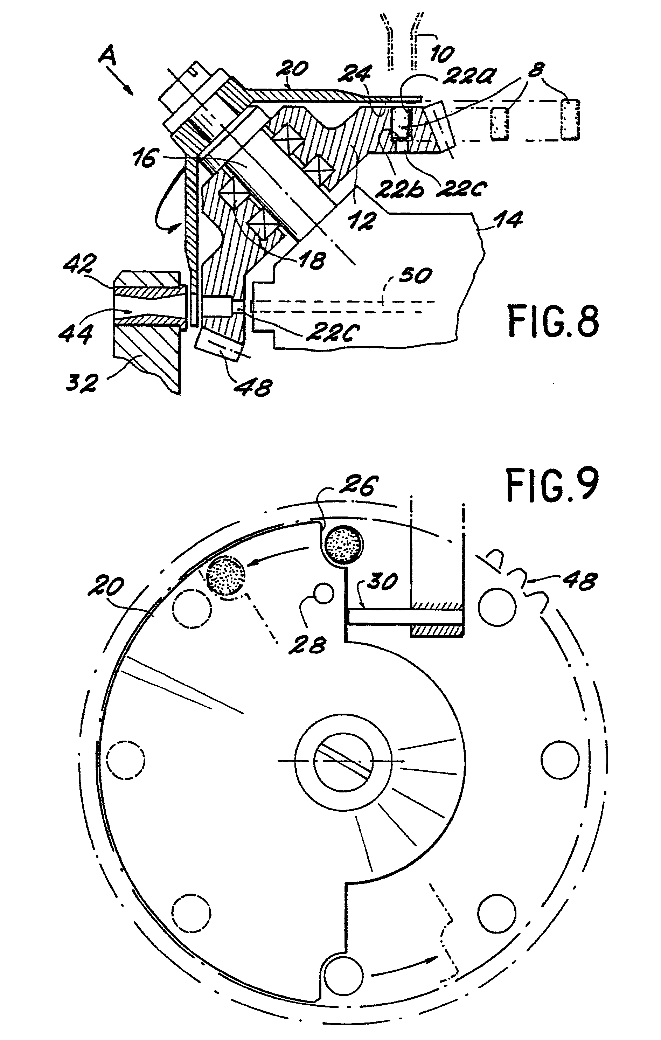

Les alvéoles 22 sont constitués chacun d'une partie 22a cylindrique, de diamètre sensiblement supérieur au diamètre maximum des pastilles combustibles 8, disposée dans l'alignement de la goulotte 10 lorsque l'alvéole est vertical et dont le fond 22b constitue l'extrémité intérieure de l'alvéole (figure 8). Un trou 22c de diamètre inférieur à celui des pastilles est percé débouchant dans ledit fond coaxialement à la partie 22a. De cette manière, une pastille 8 peut tomber directement au fond 22b de la partie 22a de l'alvéole 22 vertical correspondant.

Un dispositif apte à détecter les surlongueurs des pastilles est représenté sur les figures 8 et 9.

Ce dispositif comprend un chapeau 20 monté en rotation sur l'extrémité de l'axe de rotation 16 et venant coiffer le barillet 12. Le chapeau 20 est de forme conique et épouse la forme du barillet 12, la paroi 24 dudit chapeau en vis-à-vis du barillet étant située à une distance uniforme du fond 22b de chacun des alvéoles 22. Cette distance correspond à la longueur maximale autorisée des pastilles 8. Le chapeau 20 comporte une échancrure 26 apte à permettre le passage d'une pastille de la goulotte 10 dans l'alvéole 22 vertical correspondant. Lorsque la longueur d'une pastille dépasse la longueur maximale autorisée lors de la rotation du barillet 12, cette pastille entraîne en rotation le chapeau 20 comme il est représenté en traits mixtes sur la figure 9. La rotation du chapeau 20 est détectée par un capteur 28 tel qu'un capteur optique qui déclenche l'arrêt du distributeur. Une butée 30 est disposée en fonctionnement normal contre le chapeau 20 pour empêcher sa rotation en sens inverse de la rotation du barillet et pour que l'échancrure 26 soit toujours correctement positionnée.

Un plateau calibreur 32 cylindrique est monté à rotation horizontale sur le bâti 14, sensiblement en-dessous du barillet 12. Le plateau 32 est fixé à une extrémité d'un arbre 34 horizontal dont le guidage en rotation dans le bâti 14 est assuré par deux roulements 36, 38, le maintien en translation étant assuré par des dispositifs classiques. L'autre extrémité de l'arbre 34 est accouplée à des moyens d'entraînement 40.

Le plateau calibreur 32 est percé de trous, par exemple au nombre de huit, équidistants et disposés horizontalement selon un même diamètre. Un manchon 42 est fixé dans chacun de ces trous et comporte luimême un trou calibré 44. Comme le représente de façon agrandie la figure 7A, ce trou 44 comporte deux parties tronconiques 44a, 44b, la partie 44a se trouvant face au barillet 12, dont l'intersection 44c est située sensiblement au milieu du trou 44. Le diamètre de cette intersection 44c constitue le diamètre inférieur du trou 44, diamètre égal à un diamètre maximum autorisé des pastilles combustibles 8.

Le plateau calibreur est d'autre part disposé de telle manière que chaque trou calibré 44 peut successivement occuper une position haute où ledit trou 44 est disposé en vis-à-vis d'un alvéole 22 horizontal correspondant. Dans cette position dite "de distribution", un trou calibré 44 et un alvéole 22 sont alignés selon un axe 45 horizontal dit "de distribution".

Une couronne dentée 46 conique est formée sur la paroi du plateau calibreur 32 située du côté de l'arbre 34. Cette couronne 46 coopère avec une couronne dentée conique 48 formée sur la périphérie du barillet 12 de façon qu'elles forment un engrenage. Celui-ci permet, à chaque rotation d'un huitième de tour du plateau 32 provoquée par les moyens d'entraînement 40, une rotation correspondante d'un huitième de tour du barillet 12. Ainsi, chaque alvéole 22 et chaque trou calibré 44 occupent séquentiellement la position de distribution où ils sont alignés.

Un piston distributeur 50 est monté à glissement horizontal dans le bâti 14 coaxialement audit axe de distribution 45. Le piston 50 comporte une première partie 50a de plus grand diamètre, coulissant dans un alésage 52 du bâti, et une seconde partie 50b coulissant dans un manchon 54 fixé dans le bâti 14. Le diamètre de la seconde partie 50b est légèrement inférieur au diamètre du trou 22c (figure 8) de chaque alvéole 22. Lorsqu'un alvéole 22 et un trou calibré 44 sont dans la position de transfert, le piston 50 est ainsi apte à pénétrer dans ce trou 22c et ensuite apte à pousser une pastille 8 logée dans ledit alvéole 22 jusqu'au trou calibré 44. Si le diamètre de la pastille est inférieur au diamètre maximum autorisé (on dira que la pastille est "bonne", sinon elle sera dite "mauvaise"), le piston 50 pousse la pastille à travers le trou calibré 44 jusqu'à un vé de guidage 56 disposé dans l'alignement dudit axe de distribution 45 et à proximité du plateau calibreur 32 (figure 7A). La longueur du vé 56 est suffisante pour permettre la constitution de colonnes de pastilles combustibles, destinées à être engainées.

Les moyens pour actionner le piston distributeur 50 vont être décrits maintenant en détail en se référant aux figures 2 à 6.

Deux barres cylindriques 58, 60 superposées dans un plan vertical, parallèlement audit axe de distribution, sont fixées dans la partie inférieure du bâti 14 par deux brides 62, 64 verticales.

Les deux barres 58, 60 servent de glissières et de supports à un bâti mobile 66. A cet effet, le bâti mobile 66, de forme généralement plane et verticale, comporte dans sa partie inférieure deux alésages 68, 70 dans lesquels les deux barres 58, 60 sont respectivement enfilées.

Le bâti mobile 66 comporte dans sa partie supérieure une échancrure 72 sensiblement en forme de U. Deux galets 74, 76 sont montés à pivotement horizontal, perpendiculairement à l'axe de transfert, sur le bâti mobile 66, de chaque côté de celui-ci respectivement et à proximité des extrémités supérieures opposées de l'échancrure 72.

Deux cames 78, 80 de forme plate et ovoïde, sont solidaires d'un arbre d'entraînement 82 monté à rotation dans le bâti 14, perpendiculairement audit axe de transfert 45, et sensiblement au milieu de l'échancrure 72 quand le bâti mobile 66 est à michemin entre les deux brides 62, 64. Cet arbre 82 est situé dans un même plan horizontal que les deux galets 74, 76.

Les deux cames 78, 80 sont situées de part et d'autre du bâti 66 et appliquées sur les deux galets 74, 76 respectivement. La coopération des deux cames 78, 80 fait effectuer au bâti mobile 66 un mouvement alternatif, parallèlement audit axe de transfert, lorsque l'arbre d'entraînement 82 tourne. L'arbre 82 est entraîné en rotation par les moyens d'entraînement 40 qui comprennent un moteur 84 entraînant une poulie 86 par une courroie 88, cette poulie 86 entraînant une autre poulie 87 solidaire de l'arbre d'entraînement 82 par une courroie 89. Celle-ci est mise sous tension par un tendeur 90.

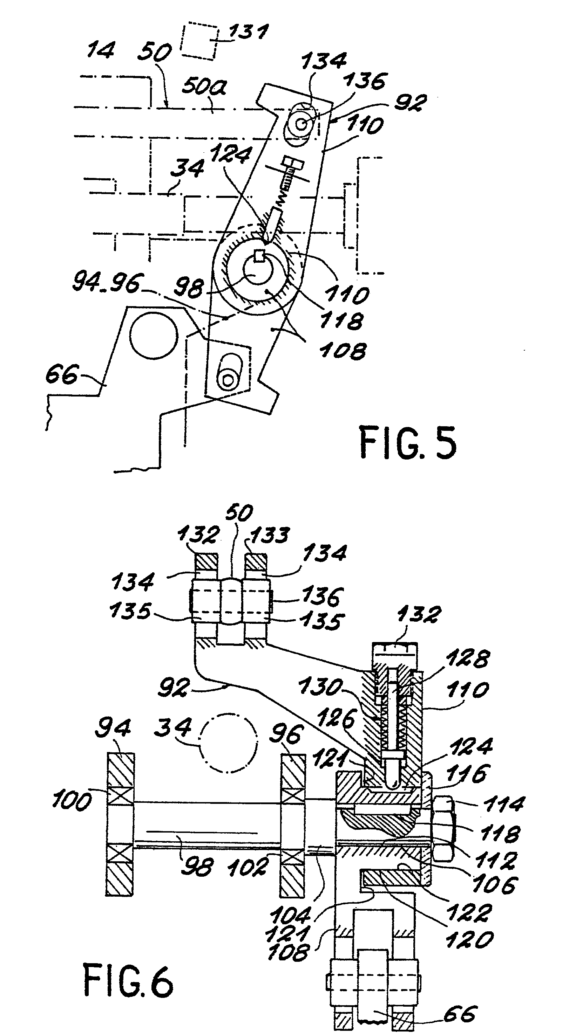

Un levier 92 est monté pivotant sur le bâti 14 comme le représentent les figures 5 et 6.

A cet effet, deux pattes 94, 96 font saillie parallèlement et verticalement du bâti 14 en-dessous de l'arbre 34 et du côté opposé au plateau calibreur 32. Un axe support 98 est monté libre en rotation perpendiculairement audit axe de transfert 45 sur ces deux pattes 94, 96, grâce à deux roulements 100 et 102, et maintenu en translation par des moyens classiques.

L'axe support 98 possède une partie dépassant de la patte 96. Cette partie comporte un épaulement 104 en appui contre le roulement 102, puis une portion cylindrique 106 possédant un filetage à son extrémité.

Le levier 92 comprend un levier inférieur 108 et un levier supérieur 110. La partie supérieure du levier inférieur 108 comporte un alésage 112 enfilé sur ladite portion cylindrique 106 jusqu'à l'épaulement 104 et maintenu en translation par une rondelle 116 et un écrou 114 vissé sur le filetage. Une clavette 118 empêche la rotation du levier inférieur 108 par rapport à l'axe support 98. Le levier inférieur 108 possède une partie cylindrique extérieure 120 coaxiale à son alésage 112, limitée par un épaulement 121.

La partie inférieure du levier supérieur 110 comporte un alésage 122 enfilé sur ladite partie cylindrique 120. La rondelle 116 est d'un diamètre suffisant pour maintenir le levier supérieur 110 entre elle-même et l'épaulement 121.

Une rainure 124 dont la section est en forme de V, est formée sur la partie cylindrique 120 parallèlement à son axe. Un trou 126 est ménagé dans le levier supérieur 110 suivant un axe radial par rapport à son alésage 122. Une tige 128 glisse dans ce trou 126 et débouche en fonctionnement normal dans la rainure 124. La tige 128 est appliquée dans cette rainure 124 avec une certaine force à l'aide d'un ressort 130 maintenu en compression par un bouchon 132 vissé dans le trou 126.

Lorsque la tige 128 est engagée dans la rainure 124, elle se comporte comme une clavette et rend le levier inférieur 108 et le levier supérieur 110 solidaires. Si le levier supérieur 110 est bloqué et que le levier inférieur 108 reçoit un couple de rotation, la tige 128 remonte le long des parois de la rainure 124 à l'encontre de l'effort exercé par le ressort 130, jusqu'à ce que ladite tige 128 sorte de la rainure: le levier inférieur 108 est alors désolidarisé du levier supérieur 110. Un détecteur 131 est prévu pour émettre un signal d'alerte lorsque le levier 92 est désaccouplé (figures 2 et 5).

La partie supérieure du levier supérieur 110 se divise en deux bras de fourche 132, 133. Un trou oblong 134 sensiblement vertical est formé dans chacun desdits bras. L'extrémité libre de la première partie 50a du piston 50 possède deux méplats parallèles disposés entre les deux bras de fourche 132, 133. Un axe 136 horizontal traverse perpendiculairement ladite extrémité et pénètre dans les trous oblongs 134 par l'intermédiaire de deux galets 135.

Un déplacement en rotation du levier 92 peut ainsi actionner le piston 50 en translation.

De la même manière, la partie inférieure du levier inférieur 108 est reliée à une extrémité du bâti mobile 66. Un déplacement en translation du bâti mobile 66 provoque alors un déplacement en rotation du levier 92.

Globalement, le déplacement alternatif du bâti mobile 66 est transformé en un déplacement alternatif du piston 50 par le levier 92 lorsque celui-ci n'est pas désaccouplé.

Une extrémité du bâti mobile 66 comporte un piston éjecteur 138 et un piston brosse 140 disposés parallèlement audit axe de transfert 45, chacun face à un trou calibré 44 du plateau calibreur 32. Ils sont aptes à pénétrer dans ces trous 44 par la face du plateau calibreur 32 opposée au barillet 12. Les pistons 138 et 140 suivent le mouvement alternatif du bâti mobile 66, le piston éjecteur 138 pénétrant dans le trou 44 correspondant pour éjecter une éventuelle pastille 8 mauvaise coincée dans ce trou (figures 7B, 7C), le piston brosse 140 pénétrant dans le trou 44 suivant pour le nettoyer.

Les pastilles 8 éjectées tombent dans un pot de rebut 162 disposé sous le plateau calibreur 32 par l'intermédiaire d'une goulotte 163.

Le fonctionnement du distributeur calibreur selon l'invention va à présent être décrit.

Tout d'abord, le bol vibrant est rempli de pastilles combustibles 8. Les pastilles sont agitées puis descendent en file dans la goulotte d'alimentation 10.

A chaque rotation d'un pas du barillet 12, une pastille 8 tombe dans l'alvéole 22 vertical correspondant. Lorsque le barillet a tourné quatre fois d'un pas, donc d'un demi-tour, la pastille est alors disposée au droit du poste de distribution. Le piston distributeur 50, qui est actionné à chaque avance d'un pas du barillet, pousse la pastille dans le trou calibré 44 correspondant du plateau calibreur 32.

Si la pastille est bonne, elle traverse le trou et le piston 50 la pousse jusqu'au vé de guidage 56 où se forme une colonne de pastilles (figure 7A).

Si la pastille est mauvaise, elle se coince dans la partie 44a du trou 44 (figure 7B). Le piston 50 ne peut alors poursuivre sa course normalement, car il est bloqué par la pastille mauvaise. Le bâti mobile 66 continue sa course, ce qui provoque le désaccouplement du levier 92, le levier supérieur 110 restant immobile comme le piston 50, le levier inférieur 108 tournant étant poussé par le bâti mobile 66. Un détecteur 131 émet alors un signal d'alerte et commande le ralentissement du distributeur. Lorsque le plateau calibreur 32 a tourné cinq fois d'un pas, la pastille mauvaise est alors disposée au droit du poste d'éjection. Le piston éjecteur 138, qui est actionné à chaque avance d'un pas du plateau repousse la pastille mauvaise hors du trou 44 (figure 7C). Celle-ci tombe alors dans le pot de rebut 162.

Le plateau tourne d'un pas et le trou 44 correspondant se trouve disposé devant le piston brosse 140 qui est alors actionné à chaque avance d'un pas du plateau pour nettoyer ledit trou 44.

La vitesse normale de fonctionnement est reprise après un tour complet. La cadence normale est d'environ quatre pastilles à la seconde.

On a décrit précédemment les cheminements possibles pour une pastille, mais il est évident qu'à chaque pas du plateau 22 et du barillet 12 une pastille est introduite, une autre pastille est poussée par le piston 50, une éventuelle pastille mauvaise est éjectée par le piston éjecteur 138 et un trou 44 est nettoyé par le piston brosse 140.

Tous les mouvements du piston 50, du bâti mobile 66, du plateau calibreur 32 et par conséquent du barillet 12 sont coordonnés par les moyens d'entraînement 40. La cadence, par exemple, du bâti mobile 66 est ajustée pour actionner le piston 50 uniquement lorsque le plateau est arrêté à un indexage et que l'alvéole 22 et le trou 44 correspondant sont alignés.

Dans certains cas, une pastille peut tomber du poste d'alimentation dans l'alvéole 22 en position verticale avec un éclat d'une autre pastille, ou tout simplement une pastille dont la longueur dépasse la longueur maximum autorisée, tombe dans ledit alvéole 22. Lorsque le barillet tourne d'un pas, la pastille trop longue entraîne dans sa rotation le chapeau 20. Le capteur optique 28 détecte le mouvement du chapeau et déclenche un signal d'alerte qui stoppe le distributeur. La pastille est alors enlevée manuellement, le chapeau 20 remis en place contre la butée 30, et le distributeur est remis en marche.

Bien entendu, la description ci-dessus n'a été donnée qu'à titre d'exemple, toutes modifications dans les formes de réalisation pouvant être envisagées sans modifier le principe fondamental de l'invention.

On peut envisager par exemple un barillet de transfert ayant une forme circulaire plane, son axe de rotation étant parallèle à celui du plateau calibreur. L'alimentation se fait alors horizontalement et le dispositif pour détecter les surlongueurs est formé par une plaque plane.

On peut aussi envisager un dispositif bielle-manivelle pour entraîner alternativement le bâti mobile 66.

Au lieu de réaliser le levier en deux parties, on peut désaccoupler le levier du piston ou réaliser le piston en deux parties, des moyens de limitation d'effort étant disposés entre les deux parties.

**Revendications**

1. Distributeur calibreur d'éléments cylindriques (8), comprenant:
   – un poste d'alimentation en éléments cylindriques (8);
   – un poste de distribution desdits éléments;
   – un poste d'éjection des éléments cylindriques non conformes; caractérisé en ce qu'il comporte;
   – un barillet (12) de transfert desdits éléments entre le poste d'alimentation (10) et le poste de distribution, ce barillet étant percé d'alvéoles (22) équidistants aptes à recevoir chacun l'un desdits éléments;
   – un plateau calibreur (32) apte à transférer entre le poste de distribution et le poste d'éjection les éléments cylindriques dont le diamètre est supérieur à un diamètre maximum toléré, ce plateau étant percé de trous calibrés (44) équidistants au moins en partie tronconiques, dont le diamètre intérieur est égal audit diamètre maximum toléré;

– des moyens (40) pour faire tourner pas-à-pas le barillet de transfert (12) et le plateau calibreur (32) et faire défiler successivement chaque alvéole (22) devant le poste d'alimentation (10) et devant le poste de distribution, et chaque trou (44) devant le poste de distribution et le poste d'éjection, de telle sorte qu'un alvéole et un trou soient alignés en vis-à-vis du poste de distribution;

– le poste de distribution comprenant des moyens (50) pour pousser les éléments cylindriques contenus dans les alvéoles (22) au travers des trous (44) calibrés avec une force maximum prédéterminée de telle sorte que seuls les éléments cylindriques de diamètre inférieur ou sensiblement égal au diamètre maximum toléré traversent lesdits trous, les éléments de diamètre supérieur à ce diamètre maximum restant coincés dans lesdits trous; et

– le poste d'éjection comprenant des moyens (138) pour éjecter les éléments cylindriques coincés dans lesdits trous et les éléments dont le diamètre est supérieur audit diamètre maximum toléré.

2. Distributeur calibreur d'éléments cylindriques selon la revendication 1, caractérisé en ce que les moyens du poste de distribution pour pousser les éléments cylindriques comportent un bâti mobile (66) guidé en translation par une glissière (58, 60) fixe d'axe parallèle auxdits trou et alvéole alignés des moyens d'entraînement permettant un mouvement alternatif du bâti mobile (66), une première extrémité d'un levier (92) étant montée de façon pivotante sur le bâti mobile (66) autour d'un axe de rotation perpendiculaire audit axe de la glissière, l'autre extrémité dudit levier (92) étant montée de façon pivotante à l'extrémité d'un piston distributeur (50), ledit piston étant mobile en translation et animé d'un mouvement alternatif, selon un axe confondu avec l'alvéole et le trou alignés en vis-à-vis du poste de distribution.

3. Distributeur calibreur d'éléments cylindriques selon la revendication 2, caractérisé en ce que des moyens de limitation d'effort (124, 128, 130) sont interposés dans l'ensemble constitué par ledit levier (92) et ledit piston distributeur (50), lesdits moyens de limitation d'effort ne transmettant pas au piston (50) le mouvement du bâti mobile (66) lorsque le piston est bloqué par un élément cylindrique de diamètre supérieur au diamètre maximum toléré et coincé dans un trou (44) du plateau calibreur.

4. Distributeur calibreur d'éléments cylindriques selon l'une quelconque des revendications 2 et 3, caractérisé en ce que les moyens du poste d'éjection comportent un piston éjecteur (138) fixé audit bâti mobile (66) parallèlement aux trou et alvéole alignés de façon à pénétrer successivement dans chacun des trous (44) du plateau calibreur (32) et à éjecter les éléments cylindriques (8) coincés dans lesdits trous.

5. Distributeur calibreur d'éléments cylindriques selon l'une quelconque des revendications 1 à 4, caractérisé en ce qu'un dispositif apte à détecter les surlongueurs des éléments cylindriques (8) est placé sur le barillet de transfert (12) et comporte une plaque (20) libre en rotation dont la paroi (24) en vis-à-vis du barillet (12) est située à une distance uniforme de l'extrémité inférieure (22b) de chacun des alvéoles (22) correspondant à une longueur maximale autorisée des éléments cylindriques, cette plaque (20) comportant une échancrure (26) normalement située en face du poste d'alimentation et des moyens (28) pour détecter un entraînement en rotation de ladite plaque par un élément cylindrique dépassant ladite longueur maximale autorisée.

6. Distributeur calibreur d'éléments cylindriques selon l'une quelconque des revendications 1 à 5, caractérisé en ce que le barillet de transfert (12) et le plateau calibreur (32) possèdent chacun une couronne dentée (48, 46), les couronnes formant un engrenage.

## Patentanspüche

1. Kalibrierverteiler von zylindrischen Elementen (8), enthaltend: einen Zuführposten (10) aus zylindrischen Elementen (8); einen Posten zur Abgabe der genannten Elemente; einen Ausstoßposten für ungeeignete zylindrische Elemente, dadurch gekennzeichnet, daß er enthält: eine Übertragungstrommel (12) für die genannten Elemente zwischen dem Zuführposten (10) und dem Abgabeposten, welche Trommel mit äquidistanten Ausnehmungen (22) zur Aufnahme jeweils eines der genannten Elemente versehen ist; eine Kalibrierplatte (32), die dazu eingerichtet ist, zwischen dem Abgabeposten und dem Abwurfposten die zylindrischen Elemente zu übertragen, deren Durchmesser größer als ein maximal zulässiger Durchmesser ist, welche Platte mit äquidistanten kalibrierten Löchern (44) versehen ist, die wenigstens teilweise trichterförmig sind, deren innerer Durchmesser gleich dem maximal zulässigen Durchmesser ist; Einrichtungen (40) zum schrittweisen Drehen der Übertragungstrommel (12) und der Kalibrierplatte (32) und zum aufeinanderfolgenden Vorbeiführen jeder Ausnehmung (22) an dem Zuführposten (10) und an dem Abgabeposten und jedes Loches (44) an dem Abgabeposten und dem Abwurfposten derart, daß eine Ausnehmung und ein Loch dem Abgabeposten ausgerichtet gegenüberstehen; wobei der Abgabeposten Einrichtungen (50) aufweist, um die in den Ausnehmungen (22) enthaltenen zylindrischen Elemente durch die kalibrierten Löcher (44) mit einer vorbestimmten Maximalkraft zu stoßen, so daß nur die zylindrischen Elemente eines Durchmessers, der kleiner oder im wesentlichen gleich dem maximal zulässigen Durchmesser ist, die genannten Löcher durchqueren, wobei die Elemente größeren als dieses maximalen Durchmessers in den genannten Löchern eingeklemmt bleiben; und der Abwurfposten Einrichtungen (138) enthält, um die in den genannten Löchern eingeklemmten zylindrischen Elemente und die Elemente, deren Durchmesser größer als der maximal zulässige Durchmesser ist, auszustoßen.

2. Kalibrierverteiler für zylindrische Elemente nach Anspruch 1, dadurch gekennzeichnet, daß die Einrichtungen des Abgabepostens zum Stoßen der zylindrischen Elemente enthalten: ein bewegliches Gestell (66), das durch eine feste Schiene (58, 60) mit einer zu dem Loch und der ausgerichteten Ausnehmung parallelen Achse in Längsrichtung geführt ist, eine Antriebseinrichtung, die eine Hin- und Herbewegung des beweglichen Gestells (66) erlaubt, wobei ein erstes Ende eines Hebels (92) schwenkbar an dem beweglichen Gestell (66) um eine zu der Schienenachse senkrechten Drehachse montiert ist, das andere Ende des genannten Hebels (92) schwenkbar am Ende eines Abgabekolbens (50) montiert ist, der Kolben in Längsrichtung beweglich ist und in einer hin- und hergehenden Bewegung gemäß einer Achse angetrieben ist, die mit der Ausnehmung und dem darauf ausgerichteten Loch gegenüber dem Abgabeposten zusammenfällt.

3. Kalibrierverteiler für zylindrische Elemente nach Anspruch 2, dadurch gekennzeichnet, daß Einrichtungen zur Kraftbegrenzung (124, 128, 130) in der Einrichtung eingesetzt sind, die durch den Hebel (92) und den genannten Abgabekolben (50) gebildet ist, wobei die Kraftbegrenzungseinrichtungen auf den Kolben (50) die Bewegung des beweglichen Gestells (66) nicht übertragen, wenn der Kolben durch ein zylindrisches Element von größerem Durchmesser als dem maximal zulässigen Durchmesser und in einem Loch (44) der Kalibrierplatte eingeklemmt blockiert ist.

4. Kalibrierverteiler für zylindrische Elemente nach einem der Ansprüche 2 und 3, dadurch gekennzeichnet, daß die Einrichtungen des Abwurfpostens einen Abwurfkolben (138) enthalten, der an dem genannten beweglichen Gestell (66) parallel zum Loch und der darauf ausgerichteten Ausnehmung befestigt ist, um nacheinander in jedes der Löcher (44) der Kalibrierplatte (32) einzudringen und die in den genannten Löchern eingeklemmten zylindrischen Elemente (8) auszustoßen.

5. Kalibrierverteiler für zylindrische Elemente nach einem der Ansprüche 1 bis 4, dadurch gekennzeichnet, daß eine Einrichtung zur Ermittlung von Überlängen der zylindrischen Elemente (8) auf der Übertragungstrommel (12) angeordnet ist und eine frei drehbare Platte (20) aufweist, deren Umfang (24) gegenüber der Trommel (12) in einer gleichmäßigen Distanz zum unteren Ende (22b) einer jeden der Ausnehmungen (22) entsprechend einer zulässigen Maximallänge der zylindrischen Elemente angeordnet ist, wobei diese Platte (20) eine halbmondförmige Aussparung (26) aufweist, die normalerweise dem Zuführposten und den Einrichtungen (28) gegenübersteht, um einen Drehantrieb der genannten Platte durch ein zylindrisches Element, das eine größere als die maximal zulässige Länge aufweist, zu ermitteln.

6. Kalibrierverteiler für zylindrische Elemente nach einem der Ansprüche 1 bis 5, dadurch gekennzeichnet, daß die Übertragungstrommel (12) und die Kalibrierplatte (32) jeweils einen gezahnten Triebkranz (48, 46) aufweisen, wobei die Triebkränze miteinander in Eingriff sind.

**Claims**

1. Calibrating distributor for cylindrical members (8) comprising a cylindrical member (8) supply station (10), a distribution station for said members, an ejection station for the non-conforming cylindrical members, characterized in that it comprises a barrel (12) for transferring these members between the supply station (10) and the distribution station, said barrel having equidistant cavities (22), each of which can receive one of the said members, a calibrating plate (32) able to transfer between the distribution station and the ejection station the cylindrical members whose diameter exceeds a maximum accepted diameter, said plate having at least partly frustum-shaped, equidistant calibrated holes (44), whose internal diameter is equal to the maximum accepted diameter, means (40) for the stepwise rotation of the transfer drum (12) and the calibrating plate (32) and for successively passing each cavity (22) in front of the supply station (10) and the distribution station and each hole (44) in front of the distribution station and the ejection station, in such a way that a cavity and a hole are aligned opposite to the distribution station, the distribution station having means (50) for forcing the cylindrical members contained in the cavities (22) through the calibrated holes (44) with a maximum predetermined force, in such a way that only the cylindrical members with a diameter smaller or substantially equal to the maximum accepted diameter passed through said holes, the members having a diameter larger than said maximum diameter remaining jammed in said holes and the ejection station has means (138) for ejecting the cylindrical members jammed in said holes and the members whose diameter exceeds said maximum accepted diameter.

2. Calibrating distributor for cylindrical members according to claim 1, characterized in that the means in the distribution station for forcing the cylindrical members comprise a mobile frame (66) guided in translation by a fixed slide (58, 60), whose axis is parallel to said aligned hole and cavity, drive means permitting an alternating movement of the mobile frame (66), a first end of a lever (92) being pivotably mounted on the mobile frame (66) about a rotation axis perpendicular to said slid axis, the other end of the lever (92) being pivotably mounted at the end of a distributor piston (50), said piston being mobile in translation and performs an alternating movement in an axis coinciding with the aligned cavity and hole facing the distribution station.

3. Calibrating distributor of cylindrical members according to claim 2, characterized in that stress limiting means (124, 128, 130) are placed between the assembly constituted by said lever (92) and said distributor piston (50), the stress limiting means not transmitting to the piston (50) the movement of the mobile frame (66) when the piston is blocked by a cylindrical member having a diameter exceeding the maximum accepted diameter and jammed in a hole (44) of the calibrating plate.

4. Calibrating distributor of cylindrical members according to either of the claims 2 and 3, characterized in that the ejection station means comprises an ejector piston (138) fixed to the mobile frame (66) parallel to the aligned hole and cavity, so as to successively penetrate each of the holes (44) of the calibrating plate (32) and eject the cylindrical members (8) jammed in said holes.

5. Calibrating distributor of cylindrical members according to any one of the claims 1 to 4, characterized in that a device able to detect excessive cylindrical members (8) lengths is placed on the transfer drum (12) and has a freely rotating plate (20), whose wall (24) facing the drum (12) is located at a uniform distance from the lower end (22b) of each of the cavities (22) corresponding to a maximum permitted length of the cylindrical members, said plate (20) having a cutout (26) normally positioned facing the supply station and means (28) for detecting a rotation of said plate by a cylindrical member exceeding said permitted maximum length.

6. Calibrating distributor of cylindrical members according to any one of the claims 1 to 5, characterized in that the transfer drum (12) and calibrating plate (32) in each case have a toothed ring (48, 46), the rings forming a gear.

**FIG.1**

**FIG.7A**

**FIG.7B**

**FIG.7C**

FIG. 2

EP 0 193 461 B1

# FIG.3

FIG.4

FIG. 5

FIG.6

EP 0 193 461 B1

FIG.8

FIG.9